(19) Europäisches Patentamt / European Patent Office / Office européen des brevets

(11) **EP 3 859 933 A1**

(12) **EUROPEAN PATENT APPLICATION**

(43) Date of publication:
04.08.2021 Bulletin 2021/31

(51) Int Cl.:
*H02J 3/38* (2006.01)

(21) Application number: 20154263.6

(22) Date of filing: 29.01.2020

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Papadimitriou, Christina N.**
 **16674 Glyfada, Athens (GR)**
• **Kleftakis, Vasileios**
 **11363 Kipseli, Athens (GR)**
• **Hatziargyriou, Nikos**
 **14342 N. Halkidona, Athens (GR)**

• **The Institute of Communication and Computer Systems (ICCS)**
 **10682 Athens (GR)**

(72) Inventors:
• **Papadimitriou, Christina N.**
 **16674 Glyfada, Athens (GR)**
• **Kleftakis, Vasileios**
 **11363 Kipseli, Athens (GR)**
• **Hatziargyriou, Nikos**
 **14342 N. Halkidona, Athens (GR)**

(74) Representative: **Weickmann & Weickmann PartmbB**
**Postfach 860 820**
**81635 München (DE)**

(54) **ISLANDING DETECTION METHOD FOR DISTRIBUTION POWER GRIDS WITH HIGH RENEWABLE ENERGY SOURCE PENETRATION**

(57) Method and device for detecting and resolving an unintentional islanding event on distribution feeders (110) supplying connected devices (10, 12) in power grids (100), with the following steps:
- inserting a small, controllable load (116) on the distribution feeder side of a central switch (114) of the distribution feeder (110) between phase and ground;
- measuring the current exchange between the feeder (110) and the power grid (100) by measuring the current through the central switch (114);
- detecting the islanding effect if the current ($I_{GRID}$) through the central switch (114) drops under a threshold ($I_{TH}$) for a specific period of time;
- if the islanding event is thus detected, switching the central switch (114) to "off" to disconnect the distribution feeder (110);
- connecting a further resistance (R3) on the distribution feeder side of the central switch (114) of the distribution feeder (110) between phase and ground to create a voltage dip to trigger the under-voltage protection algorithms of the connected devices (10, 12).

Fig. 4

**Description**

The present invention relates to a method and a device for detecting and resolving an unintentional islanding event on distribution feeders supplying connected devices in power grids.

Islanding occurs when a section of the distribution system containing DGs (distributed generation of electricity, for example photovoltaic devices) is disconnected from the main utility grid, while the DGs continue to supply fully or partially the load in the isolated section, termed island.

Early detection of islanding is required to guarantee safety and protection for the personnel and the equipment. Intentional islanding in case of faults in the upstream network is the main feature of the Microgrid (MG) concept. In this case, the microgrid must detect the disconnection from upstream network and open its main switch to isolate its operation and continue serving its critical loads. According to the IEEE standard 929-2000, the inverter based microgrid needs to detect the possible islanding condition and isolate itself. After the fault is cleared, the MG is synchronized with the upper grid and connection is restored.

Nowadays, the concept of DC MGs gain wide attention, as they offer a number of benefits. In order to detect islanding, remote methods, such as transfer trip and power line signaling are effective and may both be applied to DC MGs. However, the application of local Islanding Detection Methods (IDMs) in a DC network is challenging, as the only measurable system parameter is voltage. So, popular IDMs, such as the rate of change of frequency (ROCOF), the rate of change of frequency over power (df/dP), different shift schemes, voltage unbalance etc. are not applicable.

In the past, DC links were employed solely in HVDC schemes for power transmission over long distances. The accidental isolation of the HVDC from its receiving AC system has been tackled by detecting overvoltage or over frequency at the AC system for a time interval. This is essentially the simplest passive local IDM applied for networks. For DC networks, several papers address methods for fault detection, such as short circuits, ground faults or arc faults and the respective protection, but little work has been presented about the protection against islanding.

For example, a hybrid IDM for DC distribution networks is known that is based on the injection of a perturbation current into the PV converter control (DC-DC) to lower the DC bus voltage, when islanding occurs. The under/over voltage protection scheme detects the voltage drop and opens the DC breaker. This method proves reliable in experimental testing, but the efficiency of maximum power point tracking (MPPT) is impacted.

The state of the art regarding the present invention is disclosed in the following scientific publications:

Christina N. Papadimitriou, Vasilis A. Kleftakis, and Nikos D. Hatziargyriou, "A Novel Method for Islanding Detection in DC Networks", IEEE Transactions on Sustainable Energy, Vol. 8, No. 1, January 2017, pp. 441-448

Vasilis A. Kleftakis, Dimitris T. Lagos, Christina N. Papadimitriou and Nikos D. Hatziargyriou, "Seamless Transition Between Interconnected and Islanded Operation of DC Microgrids", IEEE Transactions On Smart Grid, Vol. 10, No. 1, January 2019, pp. 248-256

Hua Geng, Dewei (David) Xu, Bin Wu and Geng Yang, "Active Islanding Detection for Inverter-Based Distributed Generation Systems With Power Control Interface", IEEE Transactions On Energy Conversion, Vol. 26, No. 4, December 2011, pp. 1063-1072

Aziah Khamis, Hussain Shareef, Erdal Bizkevelci, Tamer Khatib, "A review of islanding detection techniques for renewable distributed generation systems", Renewable and Sustainable Energy Reviews 28 (2013), pp. 483-493

C. N. Papadimitriou, V. A. Kleftakis, N. D. Hatziargyriou, "A novel islanding detection method for microgrids based on variable impedance insertion", Electric Power Systems Research 121 (2015), pp. 58-66

Nikos D. Hatziargyriou, Vasilis A. Kleftakis, Christina N. Papadimitriou, and George M. Messinis, "Microgrids in Distribution", in Smart Grid Handbook, 2016, John Wiley & Sons, Ltd.

C. N. Papadimitriou, V. A. Kleftakis, N. D. Hatziargyriou, "Control strategy for seamless transition from islanded to interconnected operation mode of microgrids", J. Mod. Power Syst. Clean Energy (2017) 5(2): pp. 169-176.

This state of the art already discloses that islanding of the distribution feeders can be detected by simply measuring the current exchange between the feeder and the utility network (the current will drop to zero). In general, in a distribution network with high distributed generation (DG) density, any mismatch between DG power generation and consumption is covered by the upstream utility grid. However, in case that DG generation is very close to consumption, the current via the feeder central switch is almost zero and islanding might be difficult to detect. This problem is fully addressed by the insertion of a controllable load that changes periodically the current balance.

The state of the art thus already discloses a method and a device for detecting an unintentional islanding event on distribution feeders supplying connected devices in power grids, with the following steps:

- inserting a small, controllable load on the distribution feeders' side of the central switch of the distribution feeder between phase and ground;

- measuring the current exchange between the feeder and the power grid by measuring the current through the central switch;

- detecting the islanding effect if the current through the central switch drops under a threshold (in most cases very close to zero) for a specific period of time;

- if the islanding event is thus detected, switching the central switch to "off" to disconnect the distribution feeder.

Thus, according to the state of the art, an islanding event can be detected and the corresponding distribution feeder branch can be cut off to avoid problematic and dangerous effects on the general utility network. Nevertheless, within the corresponding branch feeder, there is still power on, and this also may lead to dangers and problems especially regarding the voltage and load control within the cut-off branch. Accordingly, it is an object of the present invention to guarantee that after detection of an unintentional islanding event on a distribution feeder, also in the corresponding branch feeder, there is no electrical power active anymore to avoid the corresponding dangers resulting from the voltage in the islanded microgrid.

This problem is solved with a method and an apparatus for detecting and resolving an unintentional islanding event on distribution feeders supplying connected devices in power grids by the further step of connecting a further resistance on the distribution feeder side of the central switch of the distribution feeder between phase and ground to create a voltage dip to trigger the under-voltage protection algorithms of the connected devices in the method, and by providing a further resistance in series with a switch both arranged in parallel to the small, controllable load adapted to create a voltage dip to trigger the under-voltage protection algorithms of the connected devices in the apparatus.

According to the present invention, it is further preferred that the controllable load is periodically changed.

It is further preferred that the controllable load has a much higher resistivity than the further resistance.

According to an embodiment of the invention, the controllable load may be a structure of two parallel resistors, wherein one of them is periodically switched on and off by a switch in series with this resistor only.

The present invention is disclosed on the basis of an embodiment illustrated in the enclosed drawings and explained below:

Fig. 1 generally shows how an islanding detection device is used;

Fig. 2 shows an islanding detection device in more detail for a DC grid;

Fig. 3a shows the connection of a utility network and a microgrid without islanding detection;

Fig. 3b shows the connection of a utility network and a microgrid with islanding detection;

Fig. 4 shows an islanding detecting and resolving device according to the present invention;

Fig. 5 shows the effect of the present invention upon the voltage in the microgrid.

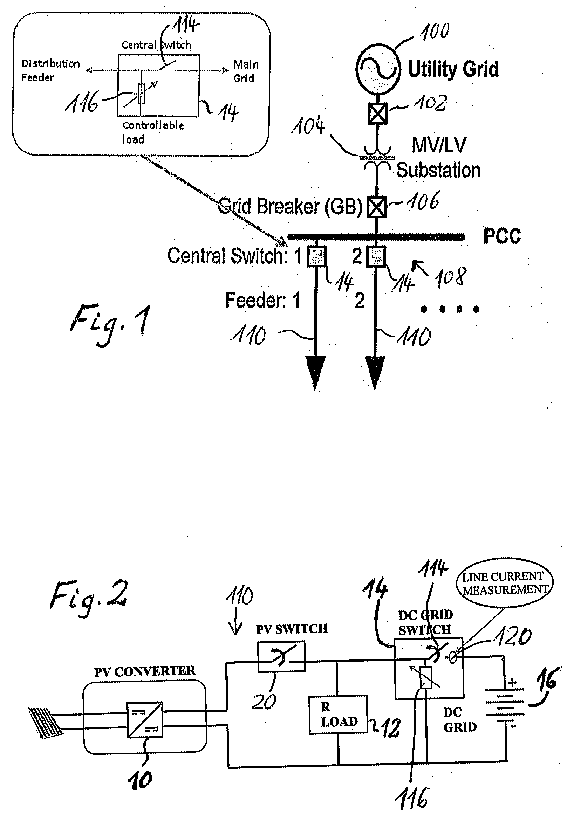

The invention aims to cover the need of fast and reliable unintentional islanding detection (ID) of a part of a distribution grid with high RES penetration. It is suitable for both Alternative Current (AC) and Direct Current (DC) power networks and is based on the insertion of a small controllable load in parallel with the central switch of the feeder where it is installed, as shown in Fig. 1. The idea is simple, yet effective under quite demanding testing as described below.

The following analysis presents the general concept of the proposed IDM.

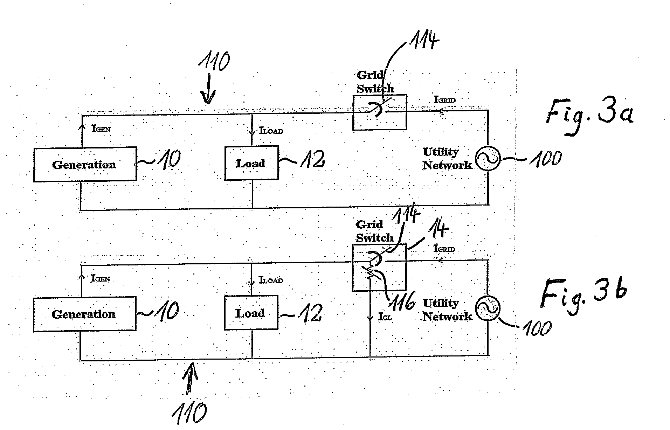

i. Electrical network without the controllable load as shown in Fig. 3a:

- If generation does not match consumption, then
$I_{GEN} \neq I_{LOAD} \Rightarrow |I_{GRID}| = |I_{GEN} - I_{LOAD}| \neq 0$
where $I_{GEN}$: generation current, $I_{LOAD}$: load current, $I_{GRID}$: network current.
By measuring $I_{GRID}$ we can detect islanding when $I_{GRID}$ is zero.
- If generation is equal to consumption, then:
$I_{GEN} \cong I_{LOAD} \Rightarrow |I_{GRID}| \cong 0$
By measuring $I_{GRID}$ it is not possible to detect the islanding situation.

By inserting the controllable load in parallel with the central switch:

ii. Electrical network with the controllable load as shown in Fig. 3b:
- If generation is equal to consumption then:
$I_{GEN} \cong I_{LOAD} \Rightarrow |I_{GRID}| \cong |I_{CL}| \neq 0$
where $I_{CL}$: current at the controllable load.
By measuring $I_{GRID}$ islanding can be detected even if generation fully matches consumption.

In the following section an example of using the invention is presented for a DC grid. Of course the same procedure is followed for an AC grid.

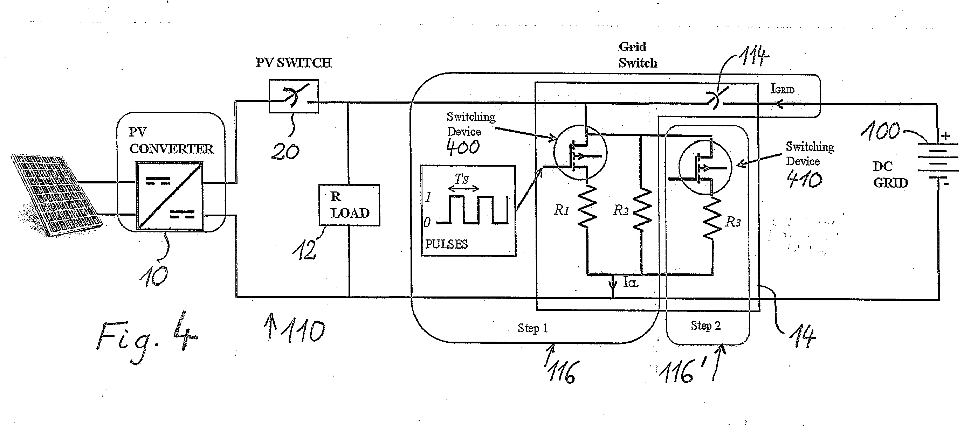

Figs. 2 and 4 present a DC system consisting of a photovoltaic generation 10 (PV panels and the appropriate converter), a resistive load 12 and the device 14 according to the invention connected between a main DC grid 16 and the generation-consumption. The DC voltage of the grid 16 is 380 Volt, the nominal power of the photovoltaic converter 10 is 1 kW and the consumption of the loads is again around 1 kW. This is the worst case scenario where the generation is equal to the consumption and the detection of the islanding event is difficult. In this scenario, an unintentional islanding event occurs at 0.5 sec. By measuring the grid current the invention is capable of detecting the islanding condition since the current drops under a specified threshold for a period of time and then the DC Grid Switch opens. According to the algorithm description this is the end of Step 1.

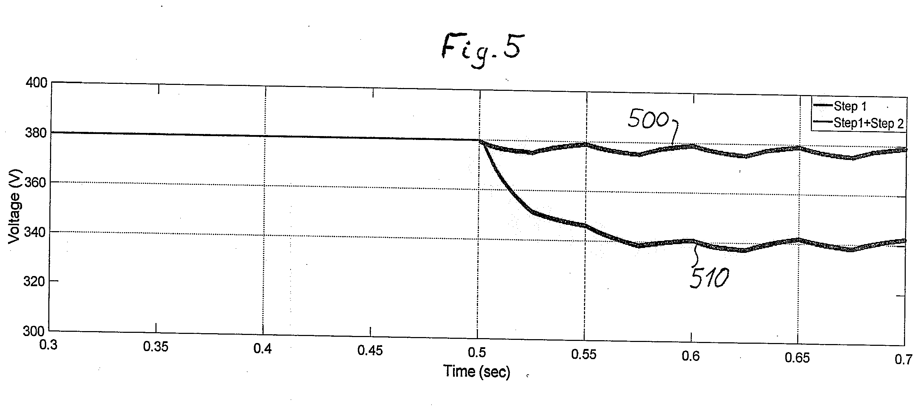

When Step 1 is over, Step 2 is activated and the resistance R3 is connected. This connection will lead to a voltage dip that will trigger the Under-Voltage protection of the connected devices. Fig. 5 shows the effect of R3 in the voltage profile. Without this addition the voltage of the network will remain close to the nominal value.

According to one embodiment of the present invention, the controllable load may be a structure of three parallel resistances (R1, R2, R3) as shown in Fig. 4.

The procedure is divided in two steps (Step 1 and Step 2). In Step 1, R1 changes according to a given pattern, R2 is permanently connected and R3 is not connected. By measuring the grid current IGRID the invention is capable of detecting an unintentional islanding condition when the current drops under a threshold for a specific period of time. At this point the Grid Switch opens and the system is disconnected from the main grid. This is the end of Step 1.

After opening the Grid Switch, the invention connects a resistance R3 in parallel to R2 in order to create a voltage dip triggering the Under-Voltage protection algorithms of the connected generating devices. This is the end of Step 2.

By Step 1 and Step 2, the invention has succeeded in opening the Grid Switch and switching off the connected devices, so that also within the branch, there is no voltage active.

In more detail, Fig. 1 shows the islanding detection method and device in a usual AC network. The country wide utility grid 100 is connected via a circuit breaker 102 with a transformer substation 104, which reduces the grid voltage (usually 10 kV) to the usual end user voltage of 380/220 V. The transformer 104 is connected via another circuit breaker 106 with the distribution network 108, which is divided into various branch feeders 110, which are connected to the low voltage grid via central switches 14. According to the invention, these central switches consist of a switch 114 and a controllable load connected between phase and ground on the distribution feeder side of the central switch 114. The central switch 114 can be opened according to the invention if an islanding condition is detected.

The corresponding embodiment for a DC network is shown in Fig. 2. Here, a DC grid 16 is connected via a grid switch 14 with a branch grid containing a load 12 and photovoltaic panels connected via a photovoltaic converter 10 with the branch grid. Between the load 12 and the photovoltaic converter 10, an additional switch 20 may be provided. The DC grid switch 14 consists also here of the central switch 114 itself and a controllable load 116 arranged on the distribution feeder side or the branch grid side of the switch. Here also the point where the line current is measured to reveal an islanding condition is shown at 120.

To show the advantages of the islanding detection method disclosed here, Fig. 3a and Fig. 3b compare the two situations. Fig. 3a shows the standard situation where a utility network or grid 100 is connected via a grid switch 114 to a branch grid consisting of at least a load 12 and a generation device 10. Islanding exists if: $I_{GEN} = I_{LOAD} \Rightarrow |I_{GRID}| = 0$.

In this situation, it is not possible to detect an islanding situation by measuring $I_{GRID}$.

Thus, according to the invention, an enhanced grid switch 14 is provided, which consists not only of the switch 114 itself, but also of a controllable load 116 arranged between the grid switch 114 itself and the branch circuit, against consisting of at least a load 12 and a generation device 10.

By providing the controllable load 116, which regularly changes between two values, even in the case that generation is equal to consumption, there is the current $I_{CL}$ through the controllable load and in case that $I_{GEN} = I_{LOAD} + I_{CL}$, $I_{GRID} \neq 0$ while $I_{CL}$ is switched off. Accordingly, by measuring $I_{GRID}$ during at least one switching cycle of the controllable load, islanding can be detected even if generation fully matches consumption and also if the difference between generation and load is equal to the current through the controllable load, since then $I_{GRID} \neq 0$, when the controllable load is switched off.

Fig. 4 shows the grid switch device according to the invention, which is not only capable of detecting the islanding condition under any load situations, but also is able to switch the generation devices in the islanded microgrid off after the islanding condition has been detected. The grid switch 14' according to the invention as shown in Fig. 4 consists of the switch 114 itself and a controllable load 116' arranged between phase and ground between the switch 114 and the microgrid/branch grid. In this case, the controllable load 116' according to the invention consists of a resistor R2, which is permanently connected between phase and ground. Parallel to this resistor a further resistor R1 is provided in series with a switching device 400. The switching device 400 is controlled with a series of pulses with a period of Ts. With this additionally provided resistor, which is switched on and off regularly, an islanding condition can be detected under any circumstances:

If the microgrid generation is exactly equal to the load (including the permanently connected resistance R2),

$I_{GRID}$ becomes 0 while R1 is switched off, but as soon as R1 is switched on the balance is disturbed and $I_{GRID}$ becomes $\dfrac{U_{GRID}}{R1}$, and with this current the islanding condition can be detected.

Even in the improbable case that the generation is equal to the load (including R1 and R2), the magnitude of $I_{GRID}$ becomes $\dfrac{U_{GRID}}{R1}$ while R1 is switched off. Accordingly the islanding condition can be detected under any circumstances.

As soon as islanding is detected, the switch 114 is opened. Thus, the microgrid/branch grid is isolated and it is guaranteed that the ongoing generation in the microgrid/branch grid cannot have any influence on the main utility grid. Nevertheless, the microgrid/branch grid is still energized and working and, without connection to the main utility grid, it may become rather difficult to keep the operational parameters like voltage of the microgrid/branch grid stable, for example if the load 12 in the microgrid/branch grid changes abruptly. Accordingly, it is an object of the present invention to de-energize the branch grid/microgrid as soon as islanding is detected and the branch grid/microgrid is separated from the general utility grid.

This object is achieved by providing a further resistor R3 in series with a further switching device 410 in parallel to R2. In this case, R3 should have a much lower resistivity than R1 or R2. As soon as islanding is detected and the switch 114 is opened, the switching device 410 is closed thus increasing the load on the microgrid/branch grid considerably and thus generating a voltage dip which serves to trip the under-voltage protection of the generation devices 10 within the microgrid/branch grid. Accordingly, with the present invention, the branch grid is not only separated from the main utility grid when islanding conditions are detected, but the generation in the microgrid/branch grid is also safely switched off.

The detection of the islanding condition depends on the accuracy with which $I_{GRID}$ can be measured. The switch 114 should be opened, if $I_{GRID}$ falls under a threshold current $I_{TH}$ for a specific time period.

The effect of providing a resistor R3 in series with the switching device 410 in parallel to R2 is shown in Fig. 5. This diagram shows the voltage in the microgrid/branch grid in case that an islanding situation is detected at the time 0.5 sec. Graph 500 shows the voltage after islanding is detected and switch 114 in Fig. 4 is opened, but without activating the switching device 410. As can be seen from the graph, the voltage starts to fluctuate, since the stabilizing effect of the main utility grid is lost, but remains in the region around the normal operation voltage of 380 V.

Graph 510 shows the situation according to the invention, wherein R3 and the switching device 410 are provided parallel to R2 and the switching device 410 is switched on when the switch 114 has been opened. Accordingly, the additional load provided by R3 leads to a considerable voltage drop from 380 V down to 340 V. This voltage drop leads after some further seconds to a switch-off of the power generation devices 10 contained in the microgrid/branch grid, so that after an islanding detection the switch-off of the branch grid/microgrid is assured.

The present invention can be used independent of the grid voltage being AC or DC.

**Claims**

1. Method for detecting and resolving an unintentional islanding event on distribution feeders (110) supplying connected devices (10, 12) in power grids (100), with the following steps:

   - inserting a small, controllable load (116) on the distribution feeder side of a central switch (114) of the distribution feeder (110) between phase and ground;
   - measuring the current exchange between the feeder (110) and the power grid (100) by measuring the current through the central switch (114);
   - detecting the islanding effect if the current ($I_{GRID}$) through the central switch (114) drops under a threshold ($I_{TH}$) for a specific period of time;
   - if the islanding event is thus detected, switching the central switch (114) to "off" to disconnect the distribution feeder (110), **characterized by** the following further step:
   - connecting a further resistance (R3) on the distribution feeder side of the central switch (114) of the distribution feeder (110) between phase and ground to create a voltage dip to trigger the under-voltage protection algorithms of the connected devices (10, 12).

2. Method according to claim 1, **characterized in that** the controllable load (116) is periodically changed.

3. Method according to claims 1 or 2, **characterized in that** the controllable load (116) has a much higher resistivity than the further resistance (R3).

4. Method according to one of claims 1 to 3, **characterized in that** the controllable load (116) is a structure of two parallel resistors (R1, R2), wherein one of them (R1) is periodically switched on and off by a switch (400) in series with this resistor (R1) only.

5. Method according to claim 4, **characterized in that** the controllable load (116) fulfils the following equation:

$$\left|\frac{V_{DC\_LOW}}{R_1//R_2} - \frac{V_{DC\_LOW}}{R_2}\right| > 2 * |I_{THRESHOLD}|,$$

wherein $V_{DC\_LOW}$ is the minimum operation voltage of the power grid (100), and $I_{THRESHOLD}$ is the threshold current of a measuring device (120) for detecting the islanding condition.

6. Device for detecting and resolving an unintentional islanding event on distribution feeders (110) supplying connected devices (10, 12) in power grids (100), with

- a small, controllable load (116) on the distribution feeder side of the central switch (114) of the distribution feeder (110) between phase and ground;
- a measuring device (120) inserted between the feeder (110) and the power grid (100) for measuring the current ($I_{GRID}$) and
- a detection device for detecting the islanding event if the current through the central switch ($I_{GRID}$) drops under a threshold ($I_{TH}$) for a specific period of time;

**characterized by**
a further resistance (R3) in series with a switch (410) both arranged in parallel to the small, controllable load (116) adapted to create a voltage dip to trigger the under-voltage protection algorithms of the connected devices (10, 12).

7. Device according to claim 6, **characterized in that** the controllable load (116) contains a resistor (R1) in series with a switch (400) connected to a pulsating control current.

8. Device according to claims 6 or 7, **characterized in that** the controllable load (116) has a much higher resistivity than the further resistance (R3).

9. Device according to one of claims 6 to 8, **characterized in that** the controllable load (116) is a structure of two parallel resistors (R1, R2) wherein one of them (R1) is in series with the switch (400).

10. Device according to claim 7 or 9, **characterized in that** the controllable load (116) fulfils the following equation:

$$\left|\frac{V_{DC\_LOW}}{R_1//R_2} - \frac{V_{DC\_LOW}}{R_2}\right| > 2 * |I_{THRESHOLD}|,$$

wherein $V_{DC\_LOW}$ is the minimum operating voltage of the power grid (100) and $I_{THRESHOLD}$ is the threshold current of a measuring device (120) for detecting the islanding condition.

## Fig. 1

Central Switch ~114

Distribution Feeder ← → Main Grid

116 — Controllable load

14

100 — Utility Grid

102

104

MV/LV Substation

Grid Breaker (GB) — 106

PCC

Central Switch: 1    2    108

14    14

Feeder: 1    2

110    110

## Fig. 2

110

PV SWITCH

14    114    LINE CURRENT MEASUREMENT

DC GRID SWITCH    120

PV CONVERTER

20    R LOAD    12    DC GRID    16

10    116

Fig. 3a

Fig. 3b

Fig. 4

EP 3 859 933 A1

Fig.5

EP 3 859 933 A1

Europäisches
Patentamt

European
Patent Office

Office européen
des brevets

# EUROPEAN SEARCH REPORT

Application Number

EP 20 15 4263

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | KLEFTAKIS VASILIS ET AL: "Seamless Transition Between Interconnected and Islanded Operation of DC Microgrids", IEEE TRANSACTIONS ON SMART GRID, IEEE, USA, vol. 10, no. 1, 1 January 2019 (2019-01-01), pages 248-256, XP011695033, ISSN: 1949-3053, DOI: 10.1109/TSG.2017.2737595 [retrieved on 2018-12-28] * the whole document * ----- | 1-10 | INV. H02J3/38 |
| Y | CN 103 138 268 B (STATE GRID CORP CHINA; NANJING NARI GROUP CORP ET AL.) 25 February 2015 (2015-02-25) * the whole document * * paragraph [0021] - paragraph [0038] * ----- | 1-10 | |

|  |  |
|---|---|
| | TECHNICAL FIELDS SEARCHED (IPC) |
| | H02J |

The present search report has been drawn up for all claims

| Place of search | Date of completion of the search | Examiner |
|---|---|---|
| Munich | 13 July 2020 | Dudoignon, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 15 4263

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2020

| Patent document cited in search report | Publication date | Patent family member(s) | Publication date |
|---|---|---|---|
| CN 103138268 B | 25-02-2015 | NONE | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHRISTINA N. PAPADIMITRIOU ; VASILIS A. KLEFTAKIS ; NIKOS D. HATZIARGYRIOU.** A Novel Method for Islanding Detection in DC Networks. *IEEE Transactions on Sustainable Energy,* January 2017, vol. 8 (1), 441-448
- **VASILIS A. KLEFTAKIS ; DIMITRIS T. LAGOS ; CHRISTINA N. PAPADIMITRIOU ; NIKOS D. HATZIARGYRIOU.** Seamless Transition Between Interconnected and Islanded Operation of DC Microgrids. *IEEE Transactions On Smart Grid,* January 2019, vol. 10 (1), 248-256
- **HUA GENG ; DEWEI (DAVID) XU ; BIN WU ; GENG YANG.** Active Islanding Detection for Inverter-Based Distributed Generation Systems With Power Control Interface. *IEEE Transactions On Energy Conversion,* December 2011, vol. 26 (4), 1063-1072
- **AZIAH KHAMIS ; HUSSAIN SHAREEF ; ERDAL BIZKEVELCI ; TAMER KHATIB.** A review of islanding detection techniques for renewable distributed generation systems. *Renewable and Sustainable Energy Reviews,* 2013, vol. 28, 483-493
- **C. N. PAPADIMITRIOU ; V. A. KLEFTAKIS ; N. D. HATZIARGYRIOU.** A novel islanding detection method for microgrids based on variable impedance insertion. *Electric Power Systems Research,* 2015, vol. 121, 58-66
- Microgrids in Distribution. **NIKOS D. HATZIARGYRIOU ; VASILIS A. KLEFTAKIS ; CHRISTINA N. PAPADIMITRIOU ; GEORGE M. MESSINIS.** Smart Grid Handbook. John Wiley & Sons, Ltd, 2016
- **C. N. PAPADIMITRIOU ; V. A. KLEFTAKIS ; N. D. HATZIARGYRIOU.** Control strategy for seamless transition from islanded to interconnected operation mode of microgrids. *J. Mod. Power Syst. Clean Energy,* 2017, vol. 5 (2), 169-176